# FASCICULE DE BREVET EUROPEEN

(11) **EP 1 783 780 B1**
(45) Date de publication et mention de la délivrance du brevet: **17.02.2010**
(21) Numéro de dépôt: 06291684.6
(22) Date de dépôt: 27.10.2006
(51) Int. Cl.: G21C 5/10, G21C 13/02

(54) **Cuve de réacteur nucléaire à eau sous pression**
Druckwasserkernreaktor-Druckgefäß
Pressurised water nuclear reactor pressure vessel

(30) Priorité: 04.11.2005 FR 0511271
(43) Date de publication de la demande: 09.05.2007
(73) Titulaire: Areva NP, 92400 Courbevoie (FR)
(72) Inventeur: Muller, Thierry, 71390 St Hélène (FR); Dolleans, Philippe, 92500 Rueil Malmaison (FR); Hensch, Fabien, 75016 Paris (FR)
(74) Mandataire: Domenego, Bertrand

(56) Documents cités:
- EP-A- 1 006 533
- GB-A- 2 015 778
- US-A- 3 821 079
- US-A- 3 850 795
- US-A- 4 192 716
- US-A- 5 267 285

## Description

L'invention concerne en général les réacteurs nucléaires à eau sous pression.

Plus précisément, l'invention concerne une cuve de réacteur nucléaire à eau sous pression, du type comprenant :
- une enveloppe extérieure comportant au moins une virole cylindrique à section circulaire, d'axe central vertical, et un fond bombé fermant une extrémité inférieure de la virole,
- au moins une entrée et une sortie d'un fluide de refroidissement primaire, ménagées dans l'enveloppe chaudronnée,
- un coeur comportant une pluralité d'assemblages de combustible nucléaire, disposés à l'intérieur de l'enveloppe chaudronnée,
- une plaque de support de coeur sensiblement perpendiculaire à l'axe central et disposée à l'intérieur de l'enveloppe chaudronnée sous le coeur, un espace de fond de cuve étant ainsi délimité entre la plaque de support et le fond bombé, la plaque de support étant percée de trous de circulation du fluide primaire mettant en communication l'espace de fond de cuve avec le coeur,
- des moyens pour canaliser le fluide primaire depuis la ou les entrées jusqu'à l'espace de fond de cuve,
- un dispositif de tranquillisation disposé sous la plaque de support dans l'espace de fond de cuve, apte à tranquilliser au moins une partie du fluide primaire amené par les moyens de canalisation avant que ce fluide traverse la plaque de support, le dispositif de tranquillisation présentant suivant des directions perpendiculaires à l'axe central des dimensions comprises entre 30 % et 60 % du diamètre interne de la virole.

Une telle cuve est connue du document EP-A-1 006 533, qui décrit des moyens de tranquillisation comprenant essentiellement une virole cylindrique coaxiale à l'axe central de la cuve.

Par ailleurs, US 5 267 285 décrit une cuve conforme au préambule de la revendication 1.

Ces moyens de tranquillisation donnent de très bons résultats.

Toutefois, dans le cas où le fluide primaire forme de petits vortex, ceux-ci peuvent passer à travers l'espace interne de la virole sans être cassés.

Dans ce contexte, l'invention vise à proposer une cuve de réacteur nucléaire pourvue d'un dispositif de tranquillisation d'efficacité améliorée, en particulier dans le cas où il se forme de petits vortex dans le fluide primaire.

A cet effet, l'invention porte sur une cuve de réacteur nucléaire du type précité, caractérisée en ce que
- la plaque de tranquillisation présente suivant l'axe central une hauteur comprise entre 15% et 40% de la hauteur maximale de l'espace de fond de cuve prise suivant cet axe.

La cuve peut également présenter une ou plusieurs des caractéristiques ci-dessous, considérées individuellement ou suivant toutes les combinaisons techniquement possibles :
- la plaque de tranquillisation est monobloc;
- la plaque de tranquillisation est une pièce forgée usinée;
- les orifices de tranquillisation s'étendent à travers la plaque de tranquillisation parallèlement à l'axe central et sont répartis suivant un réseau à maille carrée;
- les orifices de tranquillisation présentent une section carrée perpendiculairement à l'axe central ;
- les orifices de tranquillisation sont délimités au moins par un premier ensemble de lamelles parallèles entre elles et appartenant à la plaque de tranquillisation et par un second ensemble de lamelles parallèles entre elles et appartenant à la plaque de tranquillisation, les lamelles du premier ensemble étant perpendiculaires aux lamelles du second ensemble ;
- les lamelles sont droites et s'étendent chacune à travers toute la plaque de tranquillisation suivant une direction perpendiculaire à l'axe central ;
- les assemblages de combustible sont disposés dans le coeur suivant un réseau à maille carrée de côté déterminé, les lamelles du premier ensemble étant disposées suivant un pas constant multiple entier de la moitié dudit côté, les lamelles du second ensemble étant également disposées suivant un pas constant multiple entier de la moitié dudit côté ;
- les lamelles présentent une épaisseur comprise entre 5 et 50 millimètres ;
- le dispositif de tranquillisation comprend des colonnes de fixation de la plaque de tranquillisation sur la plaque de support de coeur, ces colonnes étant rigidement fixées sur des noeuds de la plaque de tranquillisation ménagés à l'intersection de lamelles des premier et second ensembles ;
- la plaque de tranquillisation présente suivant l'axe central une hauteur comprise entre 0,3 et 3,5 fois la plus grande dimension de la section des orifices de tranquillisation prise perpendiculairement à l'axe central ;
- le dispositif de tranquillisation comprend une partie cylindrique entourant la plaque de tranquillisation et solidaire du bord extérieur de ladite plaque de tranquillisation ; et
- la partie cylindrique s'étend suivant l'axe central au-delà de la plaque de tranquillisation vers la plaque de support de coeur, sur une hauteur comprise entre 25 et 100% de la hauteur de la plaque de tranquillisation.

D'autres caractéristiques et avantages de l'invention ressortiront de la description qui en est donnée ci-dessous, à titre indicatif et nullement limitatif, en référence aux figures annexées, parmi lesquelles :
- la figure 1 est une vue en coupe axiale d'une partie inférieure d'une cuve de réacteur nucléaire conforme à l'invention ;
- la figure 2 est une vue en coupe perpendiculairement à l'axe central de la plaque de tranquillisation de la figure 1, considérée suivant l'incidence des flèches II de la figure 1, seul un quart de la plaque étant représenté ;
- la figure 3 est une vue en coupe axiale du dispositif de tranquillisation de la figure 2, considérée suivant l'incidence des flèches III de la figure 2, seule la moitié de ce dispositif étant représenté ; et
- la figure 4 est une vue agrandie d'un détail IV de la figure 2 sur laquelle on a superposé les positions des trous de circulation du fluide primaire à travers la plaque de support de coeur et les positions des axes centraux des assemblages de combustible nucléaire.

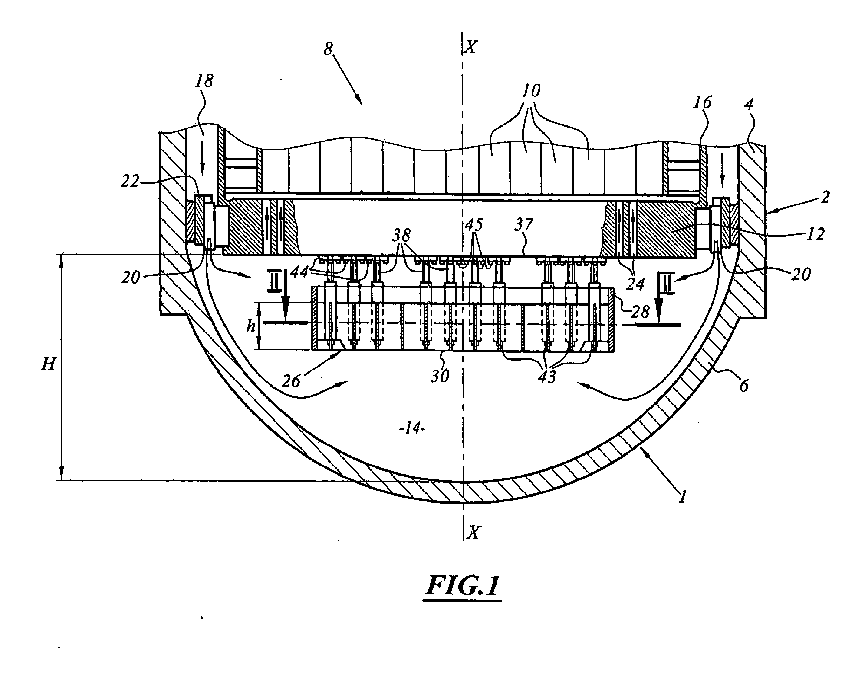

La cuve 1 représentée sur la figure 1 est une cuve de réacteur nucléaire à eau sous pression. Elle comprend une enveloppe extérieure chaudronnée 2 comportant une virole cylindrique à section circulaire 4 d'axe central vertical X, un fond bombé 6 fermant une extrémité inférieure ouverte de la virole 4, et un couvercle (non représenté) fixé de manière amovible à une extrémité supérieure ouverte de la virole 4. La virole 4 comprend généralement plusieurs éléments de virole cylindriques soudés bout à bout.

La cuve 1 comprend également plusieurs entrées d'un fluide de refroidissement primaire (non représentées), ménagées dans l'enveloppe chaudronnée 2, et plusieurs sorties (non représentées) de ce même fluide, également ménagées dans l'enveloppe chaudronnée 2.

La cuve 1 comporte un coeur 8 comprenant une pluralité d'assemblages 10 de combustible nucléaire, disposés verticalement à l'intérieur de l'enveloppe chaudronnée 2. Elle comprend également une plaque de support de coeur 12 sensiblement perpendiculaire à l'axe central X disposée à l'intérieur de l'enveloppe chaudronnée 2, sous le coeur 8. La plaque 12 s'étend en bas de la virole cylindrique 4, un espace de fond de cuve 14 étant ainsi délimité entre la plaque de support 12 et le fond bombé 6.

La cuve 1 comprend également une enveloppe de coeur 16 cylindrique à section circulaire d'axe X, disposée autour du coeur 8. L'enveloppe 16 est ainsi interposée entre le coeur 8 et la virole cylindrique 4, et présente un diamètre réduit par rapport à cette virole. L'enveloppe 16 définit ainsi avec la virole 4 un espace annulaire 18 apte à canaliser la quasi-totalité du fluide primaire depuis les entrées jusqu'à l'espace de fond de cuve 14.

La plaque de support 12 présente un diamètre sensiblement égal à celui de l'enveloppe 16, et est soudée sur toute sa périphérie à une extrémité inférieure ouverte de l'enveloppe 16.

L'enveloppe 16 est, quant à elle, suspendue au bord supérieur de la virole 4, par des moyens adaptés qui ne seront pas décrits ici.

Comme le montre la figure 1, la plaque de support 12 porte à sa périphérie une pluralité de clavettes radiales d'indexage 20, ces clavettes étant engagées dans des rainures de guidage 22 fixées à l'intérieur de la virole 4. Les clavettes 20 coopèrent avec les rainures 22 pour indexer en rotation la plaque de support 12 et l'enveloppe 16 autour de l'axe central X.

Les assemblages de combustible nucléaire 10 du coeur 8 reposent sur la plaque de support 12 par l'intermédiaire de leurs embouts inférieurs (non représentés). Ils sont disposés verticalement, parallèlement les uns aux autres, suivant un réseau à mailles carrées. La taille de la maille carrée est constante dans tout le réseau. Chaque carré présente par exemple des côtés de 215 mm environ.

La plaque de support 12 est percée de trous 24 de circulation du fluide primaire mettant en communication l'espace de fond de cuve 14 avec le coeur 8. Ces trous s'étendent selon l'axe central X et traversent la plaque de support 12 sur toute son épaisseur. Les trous 24 sont également disposés dans la plaque 12 suivant un réseau à mailles carrées, agencé de façon à ce que quatre trous 24 soient situés sous chaque assemblage 10. Lesdits quatre trous occupent les sommets d'une maille du réseau.

Ce résultat est atteint en disposant les trous 24 dans un réseau dont toutes les mailles carrées sont sensiblement de même taille, le côté de chaque maille étant approximativement la moitié du côté de la maille du réseau d'assemblages combustibles.

La maille du réseau de trous 24 présente donc une surface égale au quart de la maille du réseau d'assemblages combustibles.

La cuve 1 comprend par ailleurs un dispositif de tranquillisation 26, disposé sous la plaque de support 12 dans l'espace de fond de cuve 14, et fixé à ladite plaque de support. Ce dispositif est apte à tranquilliser au moins une partie du fluide primaire canalisé par l'espace annulaire 18 vers le bas jusqu'à l'espace de fond de cuve 14, avant que ce fluide ne traverse la plaque de support 12 vers le haut pour pénétrer dans le coeur 8.

Dans un premier mode de réalisation, représenté sur les figures 1 à 3, le dispositif de tranquillisation est un ensemble monobloc forgé usiné, comprenant une partie cylindrique extérieure 28 à section circulaire, d'axe X, et une plaque de tranquillisation 30 sensiblement perpendiculaire à l'axe X, occupant toute la section intérieure de la partie cylindrique 28. La partie 28 entoure donc complètement la plaque 30, et est solidaire du bord extérieur de ladite plaque de tranquillisation 30.

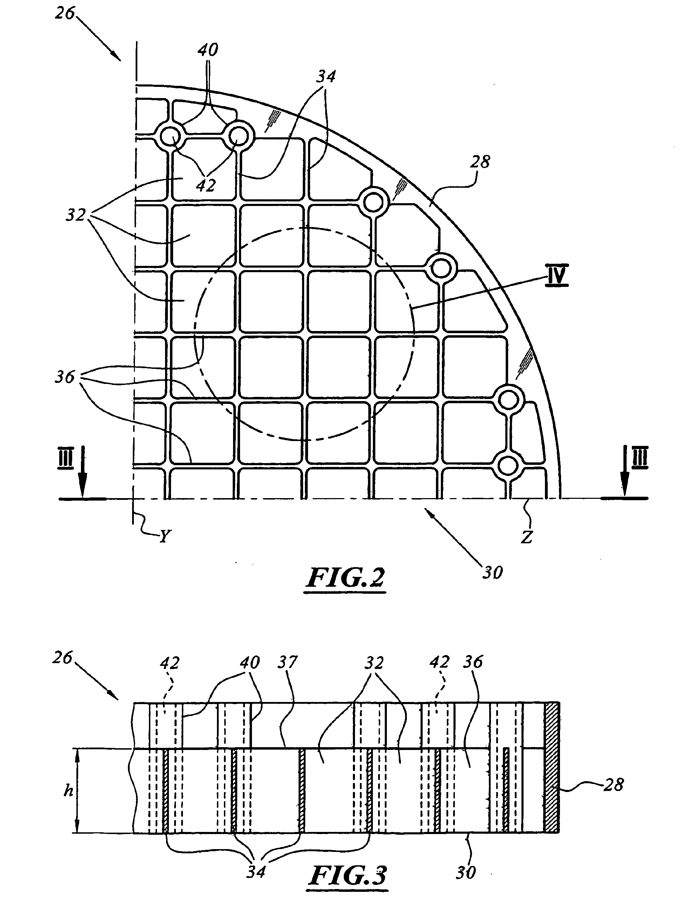

Comme le montre la figure 2, le dispositif de tranquillisation 26 comprend une pluralité d'orifices de tranquillisation 32 ménagés dans la plaque 30, et disposés selon un réseau à mailles carrées. Ces orifices 32 sont délimités par un premier ensemble de lamelles 34 parallèles entre elles et appartenant à la plaque de tranquillisation 30, et par un second ensemble de lamelles 36 parallèles entre elles et appartenant à la plaque de tranquillisation 30. Les lamelles 34 du premier ensemble sont perpendiculaires aux lamelles 36 du second ensemble. Les lamelles 34 et 36 s'étendent sur toute la hauteur de la plaque 30, la hauteur étant prise ici parallèlement à l'axe central X.

Les lamelles 34 et 36 sont droites, et s'étendent chacune à travers toute la plaque de tranquillisation 30, suivant une direction perpendiculaire à l'axe central X. Les lamelles 34 s'étendent selon la direction notée Y sur la figure 2, et les lamelles 36 suivant la direction notée Z sur la figure 2. Les lamelles 34 et 36 sont solidaires de la partie cylindrique 28 à leurs deux extrémités opposées. Les lamelles 34 croisent les lamelles 36 en des points d'intersection qu'on dénommera ci-dessous noeuds, les lamelles 34 étant ainsi solidaires des lamelles 36 à chaque noeud, et ce sur toute la hauteur de la plaque de tranquillisation 30.

Les lamelles 34 du premier ensemble sont disposées de manière à être écartées les unes des autres d'un pas constant égal au côté des mailles du réseau d'assemblage combustible 10. De même, les lamelles 36 du second ensemble sont également disposées suivant un pas constant égal au côté des mailles du réseau d'assemblages combustibles.

Les positions des lamelles 34 et 36 sont calées de telle sorte que, considérées suivant l'axe central X, ces lamelles soient disposées entre les trous de circulation 24 de la plaque de support de coeur 12.

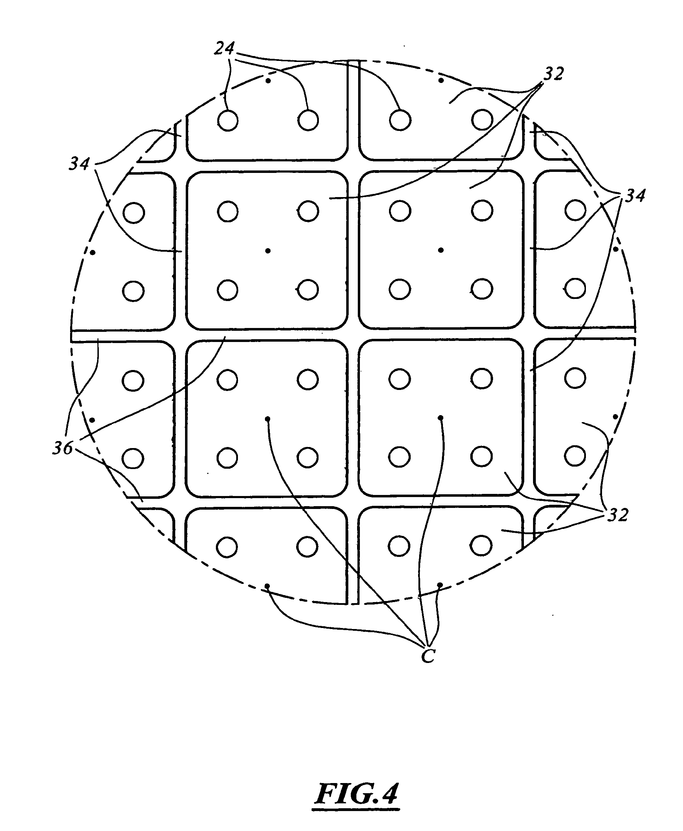

Les positions respectives des lamelles 34 et 36, des trous de circulation 24 et de l'axe central C des assemblages de combustible nucléaire, considérées suivant l'axe X, sont représentées sur la figure 4. On voit que les axes C occupent le centre des orifices carrés 32 délimités par les nervures 34 et 36. Quatre trous 24 sont disposés sur les diagonales de chaque orifice carré 32, à mi-distance entre les coins de l'orifice et l'axe C.

Comme on le voit sur la figure 2, tous les orifices de tranquillisation 32 ménagés dans la partie centrale de la plaque de tranquillisation 30 présentent une section carrée. Ces orifices 32 traversent la plaque de tranquillisation sur toute sa hauteur, parallèlement à l'axe central X. Ils sont tous de taille identique.

En revanche, les orifices 32 situés à la périphérie de la plaque 30 présentent des formes diverses. Ces orifices sont délimités vers l'intérieur de la plaque 30 par les lamelles 34 et 36, et d'un côté radialement extérieur de la plaque 30 par la partie cylindrique 28.

La plaque de tranquillisation 30 est circulaire et présente, dans un plan perpendiculaire à l'axe central X, un diamètre compris entre 30 % et 60 % du diamètre interne de la virole 4.

Par ailleurs, la plaque de tranquillisation 30 présente, suivant l'axe central X, une hauteur h comprise entre 15 % et 40 % de la hauteur maximale H de l'espace de fond de cuve 14 (voir figure 1). Cette hauteur maximale H correspond à la distance séparant une face inférieure de la plaque de support de coeur 12 de la surface interne du fond bombé 6 suivant l'axe central X de la cuve.

La hauteur h de la plaque 30 est comprise entre 0,3 et 3,5 fois la plus grande dimension de la section des orifices 32 prise perpendiculairement à l'axe X. De préférence, la hauteur h est comprise entre 0,5 et 2 fois ladite plus grande dimension, et vaut typiquement 1 fois ladite plus grande dimension.

La distance entre la face inférieure de la plaque de support de coeur 12 et la face supérieure de la plaque de tranquillisation 30 est comprise entre 10 % et 35 % de la hauteur maximale H de l'espace de fond de cuve 14.

Comme on le voit sur la figure 3, la partie cylindrique 28 du dispositif de tranquillisation se prolonge vers la plaque de support de coeur 12 au-delà de la face supérieure 37 de la plaque de tranquillisation 30. Par rapport à la face supérieure 37, la partie cylindrique 28 fait saillie sur une hauteur comprise entre 25 % et 100 % de la hauteur de la plaque de tranquillisation 30.

Le diamètre de la plaque de tranquillisation 30 est par exemple de 2610 mm environ. Le diamètre extérieur de la partie cylindrique 28 est par exemple de 2690 mm. La hauteur de la plaque de tranquillisation 30 est par exemple de 280 mm. La hauteur totale de la partie cylindrique 28 est par exemple de 430 mm.

Le pas séparant deux lamelles 34 ou deux lamelles 36 est de 215 mm environ, par exemple. Les lamelles présentent une épaisseur comprise entre 5 mm et 50 mm, et de préférence sensiblement égale à 15 mm. La longueur du côté des orifices 32 est dans ce cas d'environ 200 mm, la plus grande dimension de la section des orifices 32 étant 280 mm environ (diagonale de la section carrée).

Le dispositif de tranquillisation 26 est fixé à la plaque de support de coeur 12 par l'intermédiaire de vingt-quatre colonnes 38 s'étendant parallèlement à l'axe central X. Ces colonnes 38, comme le montre la figure 1, sont rigidement fixées, à une extrémité inférieure, sur la plaque 30, et, à une extrémité supérieure, sur la plaque 12.

A cet effet, des noeuds élargis 40 sont réalisés à l'intersection de certaines lamelles 34 et 36. Ces noeuds élargis 40 sont percés par des alésages 42 s'étendant parallèlement à l'axe central X. Les parties inférieures des colonnes 38 sont conformées en tiges filetées (non représentées). Ces tiges sont engagées dans les alésages 42, qu'elles traversent axialement de part en part. Des écrous 43 (figure 1) sont vissés sur les extrémités libres des tiges filetées en saillie sous la plaque 30. La liaison entre les colonnes 38 et la plaque de tranquillisation 30 est encore renforcée par des points ou des cordons de soudage réalisés entre les écrous et les bords des alésages 42.

Comme on le voit sur la figure 2, les alésages 42 sont disposés à la périphérie de la plaque de tranquillisation 30, immédiatement à l'intérieur de la partie cylindrique 28. Les colonnes 38 sont régulièrement réparties autour de l'axe central X.

Une extrémité supérieure de chaque colonne 38 est conformée en une plaque en croix 44 (figure 1), s'étendant perpendiculairement à l'axe X. La face supérieure de cette plaque en croix porte, en son centre, un pion de centrage, quatre trous de fixation étant ménagés dans les quatre branches de la plaque en croix. Ces plaques en croix 44 sont plaquées par leurs faces supérieures contre la plaque de support de coeur 12, les pions de centrage venant s'engager dans des logements ménagés sur la face inférieure de la plaque 12 à cet effet. Des vis 45 (figure 1) traversent les orifices de la plaque en croix et sont engagées dans des trous filetés correspondants ménagés sur la face inférieure de la plaque 12. Les positions des trous filetés sont choisies de façon à ce que la colonne 38 soit positionnée au centre d'une maille carrée du réseau de trous de circulation 24. De même que précédemment, des points ou des cordons de soudure permettent de renforcer la liaison entre la plaque en croix 44 et la face inférieure de la plaque de support de coeur 12.

On va maintenant décrire la circulation du fluide primaire à l'intérieur de la cuve de l'invention.

Le fluide primaire est généralement de l'eau. Il est refoulé par les pompes primaires du réacteur, et pénètre à l'intérieur de la cuve 1 par les entrées ménagées dans l'enveloppe chaudronnée 2. L'eau primaire circule ensuite vers le bas dans l'espace annulaire 18, jusqu'à l'espace de fond de cuve 14. Une petite partie de l'eau, en sortant de l'espace annulaire 18, passe directement entre le dispositif de tranquillisation 26 et la plaque de fond de coeur 12, sans passer à travers le dispositif de tranquillisation. Cette petite partie de l'eau pénètre ensuite dans le coeur 8 du réacteur en passant à travers les orifices 24 de la plaque 12.

La majeure partie de l'eau primaire, en sortant de l'espace annulaire 18, circule le long du fond bombé 6, puis remonte parallèlement à l'axe X, à travers le dispositif de tranquillisation 26. L'eau traverse les orifices de tranquillisation 32, puis continue son mouvement ascendant en passant à travers les trous de circulation 24 de la plaque 12.

L'eau primaire remonte ensuite le long des assemblages de combustible nucléaire 10, au contact duquel elle s'échauffe. Elle sort de la cuve 1 par les sorties ménagées dans l'enveloppe chaudronnée 2.

La cuve décrite ci-dessus présente de multiples avantages.

La structure du dispositif de tranquillisation (plaque percée d'une pluralité d'orifices) lui permet de casser très efficacement les petits vortex qui viendraient à se former dans le fluide primaire entrant dans l'espace de fond de cuve, ou se développant dans l'espace de fond de cuve au point de rencontre des courants venant des différentes entrées de la cuve.

Par ailleurs, le choix des dimensions du dispositif de tranquillisation perpendiculairement à l'axe central de la cuve contribue à rendre celui-ci particulièrement efficace.

Le fait que les orifices de tranquillisation soient délimités par des lamelles perpendiculaires les unes aux autres ménagées dans la plaque de tranquillisation conduit à un très bon compromis entre l'efficacité de la tranquillisation du fluide et la perte de charge subie par ce fluide en traversant la plaque. Ceci permet en dernier ressort de limiter la charge des pompes primaires.

La disposition des lamelles par rapport aux trous de passage du fluide primaire à travers la plaque de support de coeur permet de faciliter la circulation du fluide dans la cuve.

Par ailleurs, la hauteur de la plaque de tranquillisation et l'épaisseur des lamelles sont choisies dans des plages contribuant à améliorer le compromis entre la transparence de la plaque de tranquillisation, l'efficacité de la tranquillisation, et la tenue mécanique du dispositif de tranquillisation.

Le rapport entre la hauteur de la plaque et la plus grande dimension de la section des orifices de cette plaque est également optimisé en vue d'améliorer l'efficacité de la tranquillisation.

Le dispositif de tranquillisation est suspendu sous la plaque de support de coeur, et peut donc être sorti de la cuve du réacteur avec le sous-ensemble constitué par l'écran 16 et la plaque 12.

La partie cylindrique extérieure entourant la plaque de tranquillisation et se prolongeant au-delà de celle-ci vers la plaque de support de coeur permet de canaliser le fluide primaire sortant des orifices de tranquillisation et se dirigeant vers la plaque de support de coeur et de limiter les turbulences dans ce fluide.

Quand la cuve est utilisée dans un réacteur comprenant plusieurs boucles primaires (typiquement 4), chacune associée à une entrée et une sortie de la cuve, on a constaté que le dispositif de tranquillisation était particulièrement efficace dans le cas où la circulation dans l'une des boucles est interrompue. En effet, les entrées sont généralement réparties sur la cuve de façon que la circulation dans l'espace annulaire 18 conduisant à l'espace de fond de cuve soit uniforme sur toute la périphérie de cet espace 18. La perte d'une des boucles primaires provoque une dissymétrie dans la circulation du fluide dans l'espace annulaire, de telle sorte qu'il se crée de nombreux vortex dans le fluide primaire entrant dans l'espace de fond de cuve. Le dispositif de tranquillisation décrit ci-dessus permet de casser ces vortex de manière extrêmement efficace.

Le fait de disposer le dispositif de tranquillisation à distance sous la plaque de fond de coeur est particulièrement avantageux. En effet, on sait qu'il est souhaitable de répartir le flux d'eau de refroidissement de manière la plus homogène possible dans l'ensemble des ouvertures traversant la plaque de support de coeur 12, de manière à assurer une alimentation optimale de chacun des assemblages du coeur du réacteur nucléaire. Cependant, à l'intérieur de l'espace de fond de cuve 14, l'écoulement d'eau de refroidissement sous pression du réacteur est fortement perturbé et en particulier des tourbillons sont susceptibles de se former dans la circulation du fluide avant qu'il ne pénètre dans le coeur 8 à travers la plaque de support de coeur 12.

La répartition de débit et de pression à l'entrée du coeur est donc fortement perturbée et le champ des pressions et des débits est généralement peu uniforme si l'écoulement n'a pas été tranquillisé à l'intérieur de l'espace de fond de cuve 14, c'est-à-dire nettement avant que l'eau arrive au niveau de la plaque de support de coeur 12.

La cuve décrite ci-dessus peut présenter de multiples variantes.

Le dispositif de tranquillisation peut ne pas comprendre de partie cylindrique extérieure entourant la plaque de tranquillisation. Le dispositif de tranquillisation peut également comporter une partie cylindrique extérieure de hauteur sensiblement égale à celle de la plaque, cette partie cylindrique extérieure ne s'étendant donc pas au-delà de la plaque de tranquillisation vers la plaque de support de coeur.

La plaque de tranquillisation 30 peut ne pas présenter une forme circulaire perpendiculairement à l'axe central X. Elle peut présenter une forme carrée, rectangulaire, ovale, ou toute autre forme permettant d'obtenir une bonne efficacité pour la tranquillisation du fluide primaire. Dans tous les cas, les dimensions de la plaque suivant des directions perpendiculaires à l'axe central restent comprises entre 30 % et 60 % du diamètre interne de la virole de l'enveloppe chaudronnée.

Le dispositif de tranquillisation peut comprendre plusieurs plaques, planes, fixées les unes aux autres. Chaque plaque présente la structure décrite ci-dessus, et est pourvue de lamelles perpendiculaires les unes aux autres délimitant des orifices de tranquillisation du fluide primaire. Ces différentes plaques sont disposées perpendiculairement à l'axe central de la cuve, dans un même plan. Chaque plaque peut être entourée par une partie cylindrique qui se prolonge au-delà de cette plaque vers la plaque de support de coeur.

La plaque de tranquillisation peut ne pas être une pièce forgée usinée, mais plutôt être une structure mécano-soudée.

La plaque de tranquillisation peut être fixée sur la plaque de support de coeur par des moyens différents des colonnes de fixation décrites ci-dessus, par exemple par des entretoises soudées, sous réserve que ces moyens permettent une liaison suffisamment résistante entre les deux plaques.

Les lamelles 34 et 36 peuvent être disposées suivant un pas différent du côté des mailles carrées du réseau du réseau d'assemblages combustibles. Dans ce cas, on choisit un pas constant multiple entier de la moitié dudit côté. De préférence, on choisit un pas compris entre une fois et six fois la moitié dudit côté. Il est ainsi possible de faire passer les lamelles 34 et 36 entre les rangées de trous de circulation 24 de la plaque de support, sans obturer ceux-ci, même partiellement.

Les lamelles 34 du premier ensemble ne sont pas nécessairement perpendiculaires aux lamelles 36 du second ensemble, mais peuvent s'étendre suivant des directions inclinées par rapport aux lamelles 36, les lamelles 34 étant entrecroisées avec les lamelles 36. Ainsi, les orifices 32 ménagés dans la plaque 30 ne sont pas nécessairement carrés. Ils peuvent prendre toutes sortes de formes : rectangulaire, rond, ovale, ou autre. De manière à garantir un bon fonctionnement du dispositif de tranquillisation, il est important que ces orifices soient répartis sur toute la surface de la plaque 30, de préférence de manière uniforme. Dans ce but, il est particulièrement favorable de les disposer en un réseau de maille constante. Cette maille peut être carrée, triangulaire, en losange ou présenter une autre forme, sous réserve que celle-ci soit adaptée à la forme des orifices. Les orifices doivent être de faibles sections pour casser efficacement les petits vortex, et en nombre suffisant pour que la transparence de la plaque soit élevée, et pour que le fluide primaire ne subisse pas une forte perte de charge en traversant la plaque.

## Revendications

1. Cuve (1) de réacteur nucléaire à eau sous pression, comprenant :
- une enveloppe extérieure (2) comportant au moins une virole cylindrique (4) à section circulaire d'axe central vertical (X), et un fond bombé (6) fermant une extrémité inférieure de la virole (4),
- au moins une entrée et une sortie d'un fluide de refroidissement primaire, ménagées dans l'enveloppe chaudronnée (2),
- un coeur (8) comportant une pluralité d'assemblages de combustible nucléaire (10), disposé à l'intérieur de l'enveloppe chaudronnée (2),
- une plaque de support de coeur (12) sensiblement perpendiculaire à l'axe central (X) et disposée à l'intérieur de l'enveloppe chaudronnée (2) sous le coeur (8), un espace de fond de cuve (14) étant ainsi délimité entre la plaque de support (12) et le fond bombé (6), la plaque de support (12) étant percée de trous (24) de circulation du fluide primaire mettant en communication l'espace de fond de cuve (14) avec le coeur (8),
- des moyens (16, 18) pour canaliser le fluide primaire depuis la ou les entrées jusqu'à l'espace de fond de cuve (14),
- un dispositif de tranquillisation (26) disposé sous la plaque de support (12) dans l'espace de fond de cuve (14), apte à tranquilliser au moins une partie du fluide primaire amené par les moyens de canalisation (16, 18) avant que ce fluide traverse la plaque de support (12), le dispositif de tranquillisation (30) présentant suivant des directions perpendiculaires à l'axe central (X) des dimensions comprises entre 30% et 60% du diamètre interne de la virole (4),
le dispositif de tranquillisation (26) comprenant au moins une plaque de tranquillisation (30) sensiblement perpendiculaire à l'axe central (X) et une pluralité d'orifices de tranquillisation (32), les orifices de tranquillisation (32) étant ménagés dans la plaque de tranquillisation (30) et étant aptes à tranquilliser le fluide primaire par passage de celui-ci à travers les orifices (32, **caractérisée en ce que** la plaque de tranquillisation (30) présente suivant l'axe central (X) une hauteur comprise entre 15% et 40% de la hauteur maximale de l'espace de fond de cuve (14) prise suivant cet axe.

2. Cuve selon la revendication 1, **caractérisée en ce que** la plaque de tranquillisation (30) est monobloc.

3. Cuve selon la revendication 2, **caractérisée en ce que** la plaque de tranquillisation (30) est une pièce forgée usinée.

4. Cuve selon l'une quelconque des revendications 1 à 3, **caractérisée en ce que** les orifices de tranquillisation (32) s'étendent à travers la plaque de tranquillisation (30) parallèlement à l'axe central (X) et sont répartis suivant un réseau à maille carrée.

5. Cuve selon la revendication 4, **caractérisée en ce que** les orifices de tranquillisation (32) présentent une section carrée perpendiculairement à l'axe central (X).

6. Cuve selon la revendication 5, **caractérisée en ce que** les orifices de tranquillisation (32) sont délimités au moins par un premier ensemble de lamelles (34) parallèles entre elles et appartenant à la plaque de tranquillisation (30) et par un second ensemble de lamelles (36) parallèles entre elles et appartenant à la plaque de tranquillisation (30), les lamelles (34) du premier ensemble étant perpendiculaires aux lamelles (36) du second ensemble.

7. Cuve selon la revendication 6, **caractérisée en ce que** les lamelles (34, 36) sont droites et s'étendent chacune à travers toute la plaque de tranquillisation (30) suivant une direction perpendiculaire à l'axe central (X).

8. Cuve selon la revendication 7, **caractérisée en ce que** les assemblages de combustible (10) sont disposés dans le coeur (8) suivant un réseau à maille carrée de côté déterminé, les lamelles (34) du premier ensemble étant disposées suivant un pas constant multiple entier de la moitié dudit côté, les lamelles (36) du second ensemble étant également disposées suivant un pas constant multiple entier de la moitié dudit côté.

9. Cuve selon l'une quelconque des revendications 6 à 8, **caractérisée en ce que** les lamelles (34, 36) présentent une épaisseur comprise entre 5 et 50 millimètres.

10. Cuve selon l'une quelconque des revendications 6 à 9, **caractérisée en ce que** le dispositif de tranquillisation (26) comprend des colonnes (38) de fixation de la plaque de tranquillisation (30) sur la plaque de support de coeur (12), ces colonnes (38) étant rigidement fixées sur des noeuds (40) de la plaque de tranquillisation (30) ménagés à l'intersection de lamelles (34, 36) des premier et second ensembles.

11. Cuve selon l'une quelconque des revendications 5 à 10, **caractérisée en ce que** la plaque de tranquillisation (30) présente suivant l'axe central (X) une hauteur comprise entre 0,3 et 3,5 fois la plus grande dimension de la section des orifices de tranquillisation (32) prise perpendiculairement à l'axe central (X).

12. Cuve selon l'une quelconque des revendications précédentes, **caractérisée en ce que** le dispositif de tranquillisation (26) comprend une partie cylindrique (28) entourant la plaque de tranquillisation (30) et solidaire du bord extérieur de ladite plaque de tranquillisation (30).

13. Cuve selon la revendication 12, **caractérisée en ce que** la partie cylindrique (28) s'étend suivant l'axe central (X) au-delà de la plaque de tranquillisation (30) vers la plaque de support de coeur (12), sur une hauteur comprise entre 25 et 100% de la hauteur de la plaque de tranquillisation (30).

## Claims

1. Vessel (1) for a pressurised-water nuclear reactor, said vessel comprising:
- an outer envelope (2) comprising at least one cylindrical shell (4) having a circular cross-section with a vertical central axis (X), and a dished bottom (6) closing a lower end of the shell (4);
- at least one inlet and one outlet for a primary cooling fluid, which inlet and outlet are arranged in the boiler-type envelope (2);
- a core (8) which comprises a plurality of nuclear fuel assemblies (10) and is disposed inside the boiler-type envelope (2);
- a core-supporting plate (12) which is substantially perpendicular to the central axis (X) and is disposed inside the boiler-type envelope (2) under the core (8), a bottom space (14) of the vessel, which space is thus delimited between the supporting plate (12) and the dished bottom (6), said supporting plate (12) being pierced by holes (24) for circulating the primary fluid which bring the bottom space (14) of the vessel into communication with the core (8);
- means (16, 18) for channelling the primary fluid from the inlet or inlets as far as the bottom space (14) of the vessel;
- a calming device (26) which is disposed under the supporting plate (12) in the bottom space (14) of the vessel and is capable of calming at least part of the primary fluid supplied by the channelling means (16, 18) before the said fluid passes through the supporting plate (12), the calming device (30) having, in directions perpendicular to the central axis (X), dimensions of between 30% and 60% of the internal diameter of the shell (4);
- the calming device (26) comprising at least one calming plate (30), which is substantially perpendicular to the central axis (X), and a plurality of calming orifices (32), said calming orifices (32) being arranged in the calming plate (30) and being capable of calming the primary fluid as a result of the passage of the latter through the orifices (32); **characterised in that** the calming plate (30) has, along the central axis (X), a height of between 15% and 40% of the maximum height of the bottom space (14) of the vessel, measured along the said axis.

2. Vessel according to claim 1, **characterised in that** the calming plate (30) is in one piece.

3. Vessel according to claim 2, **characterised in that** the calming plate (30) is a machined forging.

4. Vessel according to any of claims 1 to 3, **characterised in that** the calming orifices (32) extend through the calming plate (30) parallel to the central axis (X) and are distributed in accordance with a grid having a square mesh.

5. Vessel according to claim 4, **characterised in that** the calming orifices (32) have a square cross-section perpendicularly to the central axis (X).

6. Vessel according to claim 5, **characterised in that** the calming orifices (32) are delimited at least by a first set of lamellae (34) which are parallel with one another and are part of the calming plate (30), and by a second set of lamellae (36) which are parallel with one another and are part of the calming plate (30), the lamellae (34) of the first set being perpendicular to the lamellae (36) of the second set.

7. Vessel according to claim 6, **characterised in that** the lamellae (34, 36) are straight and each extend through the whole of the calming plate (30) in a direction perpendicular to the central axis (X).

8. Vessel according to claim 7, **characterised in that** the fuel assemblies (10) are disposed in the core (8) in accordance with a grid having a square mesh with a specific side, the lamellae (34) of the first set being disposed at a constant pitch which is a whole multiple of half the said side, the lamellae (36) of the second set being likewise disposed at a constant pitch which is a whole multiple of half the said side.

9. Vessel according to any of claims 6 to 8, **characterised in that** the lamellae (34, 36) have a thickness of between 5 and 50 millimetres.

10. Vessel according to any of claims 6 to 9, **characterised in that** the calming device (26) comprises columns (38) for fixing the calming plate (30) onto the core-supporting plate (12), the said columns (38) being rigidly fixed onto nodes (40) on the calming plate (30) which are arranged at the intersection of lamellae (34, 36) belonging to the first and second sets.

11. Vessel according to any of claims 5 to 10, **characterised in that** the calming plate (30) has, along the central axis (X), a height of between 0.3 and 3.5 times the largest dimension of the cross-section of the calming orifices (32), measured perpendicularly to the central axis (X).

12. Vessel according to any of the preceding claims, **characterised in that** the calming device (26) comprises a cylindrical part (28) which surrounds the calming plate (30) and is integral with the outer edge of the said calming plate (30).

13. Vessel according to claim 12, **characterised in that** the cylindrical part (28) extends along the central axis (X) beyond the calming plate (30) towards the core-supporting plate (12), over a height of between 25 and 100% of the height of said calming plate (30).

## Patentansprüche

1. Tank (1) für Druckwasser-Kernreaktor, der umfasst:
- eine Außenhülle (2), die wenigstens einen zylindrischen Ringbeschlag (4) mit kreisförmigem Querschnitt und vertikaler Mittelachse (X) sowie einen gewölbten Boden (6), der ein unteres Ende des Ringbeschlags (4) verschließt, aufweist,
- wenigstens einen Einlass und einen Auslass für ein Primärkühlungsfluid, die in der tiefgezogenen Hülle (2) ausgebildet sind,
- einen Kern (8), der mehrere Kernbrennstoffkassetten (10) aufweist und in der tiefgezogenen Hülle (2) angeordnet ist,
- eine Kernträgerplatte (12), die zu der Mittelachse (X) im Wesentlichen senkrecht ist und in der tiefgezogenen Hülle (2) unter dem Kern (8) angeordnet ist, wodurch ein Bodenraum (14) des Tanks zwischen der Trägerplatte (12) und dem gewölbten Boden (6) begrenzt wird, wobei die Trägerplatte (12) durch Zirkulationslöcher (24) für das Primärfluid durchlocht ist, die eine Kommunikation zwischen dem Tankbodenraum (14) und dem Kern (8) herstellen,
- Mittel (16, 18), um das Primärfluid von dem Eingang oder den Eingängen bis zu dem Tankbodenraum (14) zu leiten,
- eine Beruhigungsvorrichtung (26), die unter der Trägerplatte (12) in dem Tankbodenraum (14) angeordnet ist und wenigstens einen Teil des Primärfluids, das durch die Leitungsmittel (16, 18) zugeführt wird, beruhigen kann, bevor dieses Fluid die Trägerplatte (12) durchquert, wobei die Beruhigungsvorrichtung (30) in den zur Mittelachse (X) senkrechten Richtungen Abmessungen aufweist, die im Bereich von 30 % bis 60 % des Innendurchmessers des Ringbeschlags (4) liegen,
wobei die Beruhigungsvorrichtung (26) wenigstens eine zu der Mittelachse (X) im Wesentlichen senkrechte Beruhigungsplatte (30) sowie mehrere Beruhigungsöffnungen (32) aufweist, wobei die Beruhigungsöffnungen (32) in der Beruhigungsplatte (30) ausgebildet sind und das Primärfluid mittels seines Durchgangs durch die Öffnungen (32) beruhigen können, **dadurch gekennzeichnet, dass** die Beruhigungsplatte (30) in Richtung der Mittelachse (X) eine Höhe besitzt, die im Bereich von 15 % bis 40 % der maximalen Höhe des Tankbodenraums (14) längs dieser Achse liegt.

2. Tank nach Anspruch 1, **dadurch gekennzeichnet, dass** die Beruhigungsplatte (30) einteilig ausgebildet ist.

3. Tank nach Anspruch 2, **dadurch gekennzeichnet, dass** die Beruhigungsplatte (30) ein bearbeitetes Schmiedeteil ist.

4. Tank nach einem der Ansprüche 1 bis 3, **dadurch gekennzeichnet, dass** die Beruhigungsöffnungen (32) durch die Beruhigungsplatte (30) parallel zu der Mittelachse (X) verlaufen und in einem Netz mit quadratischen Maschen verteilt sind.

5. Tank nach Anspruch 4, **dadurch gekennzeichnet, dass** die Beruhigungsöffnungen (32) einen zur Mittelachse (X) senkrechten quadratischen Querschnitt aufweisen.

6. Tank nach Anspruch 5, **dadurch gekennzeichnet, dass** die Beruhigungsöffnungen (32) wenigstens durch eine erste Gesamtheit von zueinander parallelen Lamellen (34), die zu der Beruhigungsplatte (30) gehören, und durch eine zweite Gesamtheit von zueinander parallelen Lamellen (36), die zu der Beruhigungsplatte (30) gehören, begrenzt sind, wobei die Lamellen (34) der ersten Gesamtheit zu den Lamellen (36) der zweiten Gesamtheit senkrecht sind.

7. Tank nach Anspruch 6, **dadurch gekennzeichnet, dass** die Lamellen (34, 36) geradlinig sind und sich jeweils über die gesamte Beruhigungsplatte (30) in einer zur Mittelachse (X) senkrechten Richtung erstrecken.

8. Tank nach Anspruch 7, **dadurch gekennzeichnet, dass** die Brennstoffkassetten (10) im Kern (8) in einem Netz mit quadratischen Maschen mit gegebener Kantenlänge angeordnet sind, wobei die Lamellen (34) der ersten Gesamtheit mit einer konstanten Schrittweite, die ein ganzzahliges Vielfaches der Hälfte der Kantenlänge ist, angeordnet sind und wobei die Lamellen (36) der zweiten Gesamtheit ebenfalls mit einer konstanten Schrittweite, die ein ganzzahliges Vielfaches der Hälfte der Kantenlänge ist, angeordnet sind.

9. Tank nach einem der Ansprüche 6 bis 8, **dadurch gekennzeichnet, dass** die Lamellen (34, 36) eine Dicke im Bereich von 5 bis 50 Millimeter aufweisen.

10. Tank nach einem der Ansprüche 6 bis 9, **dadurch gekennzeichnet, dass** die Beruhigungsvorrichtung (26) Säulen (38) für die Befestigung der Beruhigungsplatte (30) an der Kernträgerplatte (12) umfasst, wobei diese Säulen (38) an Knoten (40) der Beruhigungsplatte (30), die an den Schnittpunkten der Lamellen (34, 36) der ersten und der zweiten Gesamtheit ausgebildet sind, starr befestigt sind.

11. Tank nach einem der Ansprüche 5 bis 10, **dadurch gekennzeichnet, dass** die Beruhigungsplatte (30) in Richtung der Mittelachse (X) eine Höhe im Bereich von der 0,3-fachen bis zu der 3,5-fachen größten Abmessung des Querschnitts der Beruhigungsöffnungen (32) senkrecht zur Mittelachse (X) aufweist.

12. Tank nach einem der vorhergehenden Ansprüche, **dadurch gekennzeichnet, dass** die Beruhigungsvorrichtung (26) einen zylindrischen Abschnitt (28) aufweist, der die Beruhigungsplatte (30) umgibt und mit der Außenkante der Beruhigungsplatte (30) fest verbunden ist.

13. Tank nach Anspruch 12, **dadurch gekennzeichnet, dass** sich der zylindrische Abschnitt (28) in Richtung der Mittelachse (X) über die Beruhigungsplatte (30) hinaus zu der Kernträgerplatte (12) über eine Höhe im Bereich von 25 bis 100 % der Höhe der Beruhigungsplatte (30) erstreckt.
